# EUROPÄISCHE PATENTSCHRIFT

(11) **EP 1 139 686 B1**
(45) Veröffentlichungstag und Bekanntmachung des Hinweises auf die Patenterteilung: **07.08.2013**
(21) Anmeldenummer: 01107926.6
(22) Anmeldetag: 28.03.2001
(51) Int. Cl.: H04W 84/16

(54) **Verfahren und Anordnung zur Mobilkommunikation**
Method and system for mobile communication
Méthode et système pour communication mobile

(30) Priorität: 31.03.2000 DE 10016239
(43) Veröffentlichungstag der Anmeldung: 04.10.2001
(73) Patentinhaber: Siemens Enterprise Communications GmbH & Co. KG, 81379 München (DE)
(72) Erfinder: Carstensen, Meint-Uden, 33106 Paderborn (DE); Koopmann, Heinz, 33104 Paderborn (DE); Pusch, Wolfgang, 33142 Bueren (DE); Schuetz, Manfred, 33189 Schlangen (DE)
(74) Vertreter: Fritzsche, Thomas

(56) Entgegenhaltungen:
- EP-A- 0 987 912
- WO-A-99/25138
- DE-C- 19 618 531

## Beschreibung

Die Erfindung betrifft ein Verfahren und eine Anordnung, mit welchen eine Verbindung zwischen einer Heimeinrichtung, welche einer Mobilen Kommunikationseinrichtung zugeordnet ist und dieser mobilen Kommunikationseinrichtung aufgebaut werden kann. Insbesondere betrifft die Erfindung das Roaming von DECT-Mobilteilen in privaten Netzen PISN (Private Integrated Services Network), die mit einer ihnen zugeordneten privaten Nebenstellenanlage PINX (Private Integrated Network Exchange) kommunizieren.

Bei gängigen Kommunikationseinrichtungen, welche die Mobilkommunikation mit Mobilteilen ermöglichen, wie beispielsweise der von der Siemens AG angebotenen Kommunikationsanlage HICOM Cordless E, werden in mobilen Kommunikationseinrichtungen vorgesehene Terminalfunktionalitäten, wie beispielsweise die Steuerung einer im Mobilteil vorgesehenen Anzeige mittels einer Stimulus-Steuerung durch die Vermittlungseinrichtung vorgenommen. Ebenso werden von dieser Einrichtung sämtliche DECT-Funktionalitäten, wie sie beispielsweise beim Roamen des Mobilteils benötigt werden, bereitgestellt. Zur Ermöglichung dieser Funktionalität ist zum einen eine feste Zuordnung eines jeweiligen Mobilteils zu einer Vermittlungseinrichtung und deren Signalisierungsverbindung zur DECT-Steuerung erforderlich, und zum anderen der Unterhalt einer weiteren Signalisierungsverbindung zu den jeweiligen Mobilteilen unerläßlich, wenn das Mobilteil über eine fremde Vermittlungseinrichtung kommuniziert. Weil für diese Signalisierungsverbindungen Datenübertragungskapazität bereitgestellt werden muß, sind derartige zu unterhaltende Verbindungen unerwünscht.

In dem ISO-Report für Private Integrated Services Network (PISN) Mobility (ISO/IECTR15410:9E), wird die Mobilität in unterschiedliche Ebenen aufgeteilt. Insbesondere wird dort für drahtlose Terminals die Wireless Terminal Mobility (WTM) definiert, die sich beispielsweise auch auf DECT (GAP) Mobilteile anwenden läßt, wie später noch erläutert werden wird.

Aus EP 0 987 912 A2 ist eine Schnurloskommunikationsanlage bekannt, bei der über einen Mobilitätsserver Verbindungsinformationen bereitgestellt werden und der Verbindungsaufbau zu dem entsprechenden Vermittlungsrechner, in dessen Funkbereich sich ein Schnurlosendgerät befindet, gesteuert wird. Das Schnurlosendgerät gibt Informationen ab, die zum Mobilitätsserver übertragen werden, woraus dieser in Verbindung mit Zusatzinformationen vom Vermittlungsrechner oder der Basisstation die Informationen für den Verbindungsaufbau zum Schnurlosendgerät ableiten kann. Um die eingesetzten Vermittlungsrechner auf eine Schaltfunktion beschränken zu können, werden Leistungsmerkmale der Schnurlosendgeräte über einen Leistungsmerkmalserver realisiert.

In WO 99/25138 ist ein Verfahren entsprechend dem Oberbegriff des Anspruchs 1 und eine Anordnung entsprechend dem Oberbegriff des Anspruchs 7 beschrieben.

Die der Erfindung zugrunde liegende Aufgabe besteht darin, ein Verfahren und eine Anordnung anzugeben, mit welchen eine drahtlose Terminalfunktionalität unter Vermeidung der Nachteile bekannter Einrichtungen bereitgestellt werden kann.

Diese Aufgabe wird für das Verfahren gemäß den Merkmalen des Patentanspruches 1 und für die Anordnung gemäß den Merkmalen des Patentanspruches 7 gelöst. Weiterbildungen der Erfindungen ergeben sich aus den abhängigen Ansprüchen.

Besonders vorteilhaft wird beim erfindungsgemäßen Verfahren bei Bedarf eine Kommunikationsverbindung zwischen der mobilen Kommunikationseinrichtung und der Heimkommunikationseinrichtung unterhalten. Erfindungsgemäß wird trotzdem ein definierter Kommunikationszustand ermöglicht, indem von der mobilen Kommunikationseinrichtung im Zuge des Aufbaus einer Mobilkommunikationsverbindung an eine Besuchereinrichtung Informationen übermittelt werden, die es ermöglichen, zur Heimkommunikationseinrichtung eine leitungsgebundene Verbindung aufzubauen. Vorteilhaft findet erfindungsgemäß also lediglich ein Daten- und Befehlsaustausch zwischen der Heimkommunikationseinrichtung und der mobilen Kommunikationseinrichtung im Zuge des Aufbaus einer Kommunikationsverbindung über diese leitungsgebundene Verbindung statt.

Besonders vorteilhaft wird die von der Mobilkommunikationseinrichtung an die Besuchereinrichtung zu übertragende Information in der mobilen Kommunikationseinrichtung gespeichert, wobei die Speicherung dieser Information lediglich einmal auf administrativem Weg erfolgt. So wird erreicht, daß auf administrativem Weg definierte Kommunikationszustände im Mobilkommunikationssystem festgelegt werden. Besonders vorteilhaft wird so auch sichergestellt, daß mobilfunkstandardkonforme Einschreibe- und Registrierungsprozeduren, wie sie beispielsweise beim DECT-Standard üblich sind, für die Abspeicherung der benötigten Informationen eingesetzt werden können.

Besonders vorteilhaft läßt sich das erfindungsgemäße Verfahren einsetzen, wenn für die Mobilkommunikation ein Protokoll nach dem DECT-Standard (Digital Enhanced Cordless Telephone) eingesetzt wird. Vorteilhaft kann nämlich dort die IPUI-O, welche zum Ablegen systemspezifischer Daten im Mobilteil vorgesehen ist, zur Aufnahme der zu übertragenden Informationen verwendet werden, weil im Standard hinreichend große Speicherbereiche im Typ O der International Portable User Identification (IPUI-O) vorgesehen sind.

Besonders vorteilhaft wird in einer Weiterbildung das erfindungsgemäße Verfahren in einem privaten diensteintegrierten Netzwerk (PISN) eingesetzt, weil für den Aufbau der leitungsgebundenen Verbindung zu der privaten Nebenstellenanlage auf etablierte Kommunikationsstandards zurückgegriffen werden kann, indem beispielsweise von der Besuchereinrichtung ein Basic Call unter Verwendung der vom Mobilteil übertragenen Informationen, beispielsweise der Rufnummer der Heimvermittlungseinrichtung, eingeleitet wird. Besonders vorteilhaft eignet sich ein derartiges Verfahren auch für den Einsatz in handelsüblichen Vermittlungseinrichtungen, bei denen bisher der Unterhalt von zwei Signalisierungsverbindungen unerläßlich war.

Besonders vorteilhaft wird bei einer Weiterbildung des erfindungsgemäßen Verfahrens über die leitungsgebundene Verbindung lediglich eine Signalisierungsverbindung aufgebaut, weil beispielsweise für den Austausch von Steuerbefehlen zu Änderungen von Anzeigeinhalten auf dem Mobilteil, bzw. zum Aufruf eines Leistungsmerkmals in der Vermittlungseinrichtung keine Gesprächsverbindung benötigt wird, und auf diese Weise besonders ökonomisch mit der verfügbaren Datenübertragungskapazität umgegangen wird.

Besonders vorteilhaft ist eine erfindungsgemäße Kommunikationseinrichtung gemäß Anspruch 7, Auf diese Weise wird eine Minimalkonfiguration zur Ausführung eines erfindungsgemäßen Verfahrens bereitgestellt.

Besonders vorteilhaft kommunizieren die mobile Kommunikationseinrichtung und die Heimvermittlungseinrichtung über ein privates diensteintegriertes Netz, weil sich dort Vorteile erzielen lassen, wenn nicht ein ständiger Kontakt zwischen Heimvermittlungseinrichtung und mobiler Kommunikationseinrichtung unterhalten werden muß. Zum einen wird die Heimvermittlungseinrichtung entlastet, weil sie die DECT-Funktionen nicht steuern muß, zum anderen wird die nutzbare Kommunikationsbandbreite des Systems erhöht, weil unnötige Signalisierungsverbindungen entfallen können.

Besonders vorteilhaft kann die Besuchereinrichtung auch in der Heimvermittlungseinrichtung angeordnet sein. Auf diese Weise läßt sich innerhalb des gesamten privaten diensteintegrierten Netzwerkes die gleiche Infrastruktur und das gleiche Verfahren unter Verwendung eines Basic Calls einsetzen.

Besonders vorteilhaft weist die mobile Kommunikatioseinrichtung eine Zweiteilung des Aufbaus in Netzwerkmittel und Terminalmittel auf, die miteinander in Wirkverbindung stehen. Diese Zweiteilung erlaubt es vorteilhaft, daß zwischen der mobilen Kommunikationseinrichtung und der Besuchereinrichtung eine funktionale Steuerung zur Abhandlung des DECT-Protokolles durchgeführt werden kann, während zwischen der Heimkommunikationseinrichtung und der mobilen Kommunikationseinrichtung eine Stimulus-Steuerung zur Steuerung der Terminalfunktionalität im Mobilteil, bzw. zum Aufruf von Leistungsmerkmalen in der Heimkommunikationseinrichtung durch das Mobilteil, durchgeführt werden kann.

Im Folgenden werden Ausführungsbeispiele der Erfindung anhand von Figuren weiter erläutert.
- Figur 1: zeigt Mobilitätsebenen nach ISO,
- Figur 2: veranschaulicht ein privates Netzwerk,
- Figur 3: zeigt schematisiert die Kommunikation zwischen einer mobilen Einrichtung und einer Heimeinrichtung.
- Figur 4: zeigt schematisiert einen kommenden und einen gehenden Verbindungsaufbau.

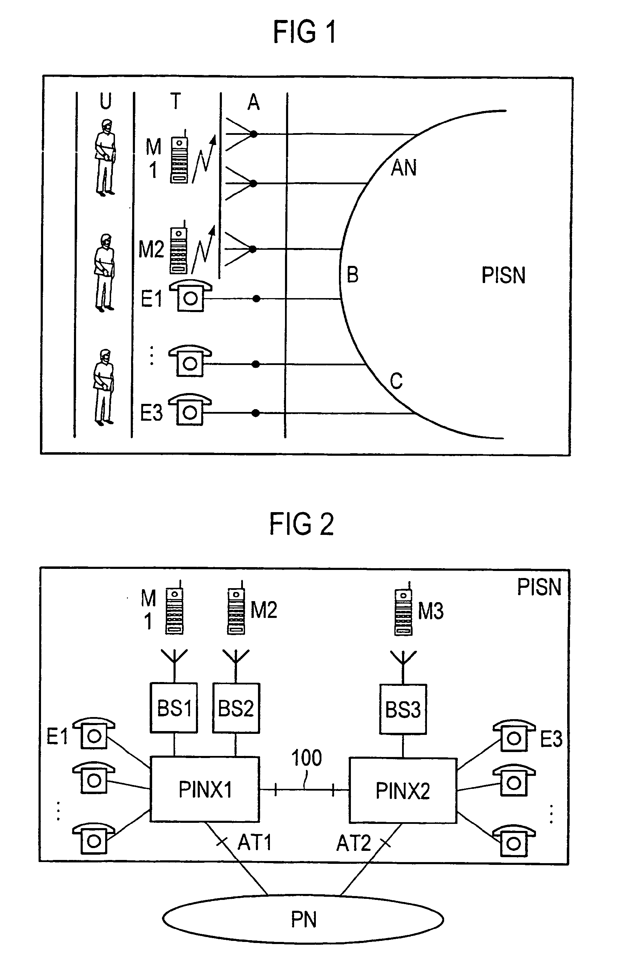

Wie Figur 1 zeigt, unterscheidet die internationale Standardisierungsorganisation ISO mehrere Mobilitätsebenen. Zum einen die Mobilität auf der Benutzerebene U zum anderen die Mobilität auf der Terminalebene T und als dritte Schicht die Zugangsschicht A. Weiterhin sind dargestellt mobile Kommunikationseinrichtungen M1, die beispielsweise über Basisstationen auf der Zugangsschicht A an ein privates diensteintegriertes Netzwerk PISN über den Zugang AN angeschlossen sind.

Hier sind mobile Kommunikationseinrichtungen M1 und M2 dargestellt, es können aber beliebig viele Kommunikationseinrichtungen Verwendung finden. Gängige Beispiele solcher Einrichtungen sind Mobiltelefone, bzw. Personal Computer oder Organizer. Weiterhin sind drahtgebundene Endgeräte E1 bis E3 dargestellt, welche feste Zugänge zum privaten Netz B und C haben. Charakteristisch ist es für diese Endgeräte, daß sie keine Variabilität auf der Zugangsebene A aufweisen, während die Mobilgeräte M1 und M2 über unterschiedliche Zugänge, beispielsweise B und AN mit dem privaten Netz PISN in Verbindung treten können. Durch diese Wireless Terminal Mobility WTM wird die Beziehung zwischen Terminalebene T und Zugangsebene A aufgebrochen, der Benutzer auf der Benutzerebene U wird in die Lage versetzt, mittels seines mobilen Kommunikationsgerätes M unterschiedliche Zugänge zum privaten integrierten Dienstenetzwerk PISN zu wählen, ohne daß er dabei Leistungsmerkmale verliert, oder die Benutzeroberfläche wechseln muß.

Bei derzeit üblichen Kommunikationseinrichtungen ist die Terminalsteuerung von mobilen Kommunikationsendgeräten einer festen logischen Adresse, beispielsweise einer Rufnummer innerhalb der Vermittlungseinrichtung des privaten integrierten Dienstenetzwerkes PISN zugeordnet. Sie steuert die Leistungsmerkmale und abhängig von den optischen und akustischen Einrichtungen der Terminals die Benutzeroberfläche. Um eine ständige Erreichbarkeit des Mobilteils durch die Heimvermittlungseinrichtung sicherstellen zu können, wird beim Roamen die aktuelle Erreichbarkeit der mobilen Einrichtung in der Location Area, durch Weitergabe der Rufnummer der betreuenden Besuchereinrichtung und der mobilen Kommunikationseinrichtung an eine Datenbasis der Heimvermittlungseinrichtung und deren Verknüpfung sichergestellt. Durch diesen Bezug zur Heimvermittlungseinrichtung tritt das Mobilteil gegenüber der Vermittlungseinrichtung als Festnetzendgerät auf.

Figur 2 zeigt die Darstellung eines privaten diensteintegrierten Netzwerkes PISN. In diesem privaten Netz sind mobile Kommunikationseinrichtungen M1 bis M3 vorhanden, die über Basisstationen BS1 bis BS3 an private integrierte Nebenstellenvermittlungseinrichtungen PINX1 und PINX2 angeschlossen sind. Ebenso sind dort Festnetzendgeräte E1 und E3 vorhanden. Weiterhin ist erkennbar, daß die privaten Nebenstellenanlagen über eine Querverbindung 100 miteinander verbunden sind, während sie ebenso über Anschlußleitungen AT1 und AT2 Zugang zu einem öffentlichen Netz PN haben. In diesem Zusammenhang ist besonders zu erwähnen, daß die Darstellung der Zuordnung von Mobilteilen über Basisstationen zu den privaten Nebenstellenvermittlungseinrichtungen PINX1 und PINX2 nicht so verstanden werden muß, daß beispielsweise PINX1 die Heimvermittlungseinrichtung der mobilen Kommunikationseinrichtung M1 ist. Vielmehr kann jede dargestellte Vermittlungseinrichtung die Heimeinrichtung jedes Mobilteiles sein. Beispielsweise kann die mobile Kommunikationseinrichtung M3 der Heimvermittlungseinrichtung PINX1 zugeordnet sein. Dabei ist es völlig unerheblich, welches Kommunikationsprotokoll zwischen den Mobilteilen M und den Basisstationen B abgehandelt wird. Aus bestimmten, zuvor erwähnten Gründen eignet sich das DECT-Protokoll besonders deswegen, weil der Typ O der International Portable User Identification (IPUI-O) einen administrativ belegbaren Bereich für systemspezifische Daten vorsieht und diese IPUI-O bei der Kontaktaufnahme zwischen Mobilteil und Besuchereinrichtung standardmäßig übergeben wird.

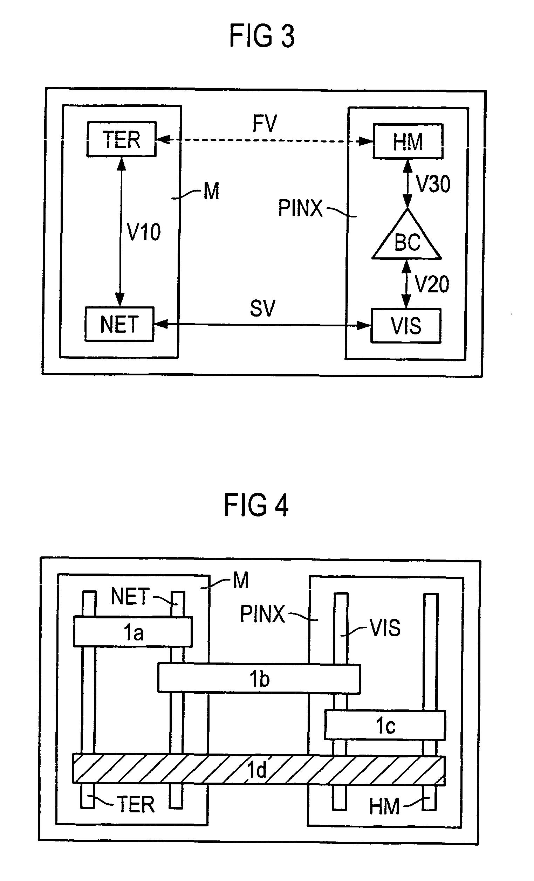

Figur 3 veranschaulicht anhand eines Beispiels die Mobilkommunikation zwischen einer mobilen Kommunikationseinrichtung M und einer privaten Nebenstellenvermittlungseinrichtung PINX. In der mobilen Kommunikationseinrichtung sind Terminalmittel TER vorhanden, die beispielsweise in Form von Anzeige- oder Ausgabemitteln realisiert sein können. Weiterhin sind dort Netzwerkmittel NET vorhanden, die der funktionalen Steuerung der Kommunikation über die Luftschnittstelle SV dienen, indem sie beispielsweise das DECT-Protokoll abhandeln. Ein Informationsaustausch zwischen dem Terminalmittel TER und dem Netzwerkmittel und NET findet über eine logische Verbindung V10 statt. In der privaten Nebenstellenvermittlungseinrichtung PINX ist ein Heimbereich vorhanden, welcher beispielsweise Daten über Leistungsmerkmale, bzw. Anzeigeeigenschaften der mobilen Kommunikationseinrichtung M enthält. Mit der gestrichelten Verbindung FV zwischen TER und HM ist eine logische Kommunikationsverbindung dargestellt, über welche eine wechselseitige Stimulus-Steuerung zwischen dem Terminalmittel der Mobilkommunikationseinrichtung M und dem Heimbereich HM der privaten Nebenstellenvermittlungseinrichtung PINX statt findet. Weiterhin enthält diese Vermittlungseinrichtung PINX eine Besuchereinrichtung VIS, welche über eine Verbindungsleitung V20 Zugriff auf eine Grundruffunktionalität BC (Basic Call) besitzt und damit Möglichkeit über eine Verbindungsleitung V30 den Heimbereich HM zu kontaktieren. Zwischen der Besuchereinrichtung VIS und dem Heimbereich und HM ist eine leitungsgebundene Verbindung über V20 und V30 schaltbar, wobei diese Verbindung sowohl Gespräche als auch Signalisierungen zuläßt. Diese können fallweise als separate Verbindungen oder in Kombination eingerichtet werden können. In diesem Zusammenhang ist zu erwähnen, daß die Besuchereinrichtung VIS nicht notwendigerweise in der gleichen privaten Nebenstellenvermittlungseinrichtung integriert sein muß, in welcher sich der Heimbereich HM der mobilen Kommunikationseinrichtung M befindet.

Bei der Einrichtung einer mobilen Kommunikationsverbindung zwischen der mobilen Kommunikationseinrichtung und der privaten Nebenstellenvermittlungseinrichtung PINX geschieht folgendes:

Zunächst wird die Verbindung initialisiert und es werden in der mobilen Kommunikationseinrichtung M gespeicherte Informationen über die Erreichbarkeit ihres Heimbereiches an die Besuchereinrichtung VIS übergeben. Die Besuchereinrichtung VIS veranlaßt über die Grundruffunktionalität BC den Aufbau einer leitungsgebundenen Verbindung zum Heimbereich HM der mobilen Kommunikationseinrichtung M. Über die logische Verbindung FV findet ein Steuersignalaustausch zwischen den Terminalmitteln TER der mobilen Kommunikationseinrichtung M und dem Heimbereich HM der privaten Nebenstellenvermittlungseinrichtung PINX statt. Für den Fall, daß über die Luftschnittstelle SV das DECT-Kommunikationsprotokoll abgehandelt wird, ist es besonders günstig, in der mobilen Kommunikationseinrichtung bei einer administrativen Festlegung im Zusammenhang mit dem Registrieren und dem Einschreiben dieser mobilen Kommunikationseinrichtung in der nach dem DECT-Standard vorgesehenen Typ O der International Portable User Identification (IPUI-O) eine Information über die Erreichbarkeit des Heimbereiches für dieses spezielle Mobilteil abzulegen. Beispielsweise kann dies direkt die Rufnummer der entsprechenden Vermittlungseinrichtung sein, die dann an die Besuchereinrichtung übergeben wird, oder es kann sich beispielsweise um eine Kennung handeln, mit der der Zugriff auf die Rufnummer des Heimbereichs über eine zentrale Datenbank ermöglicht wird.

Figur 4 zeigt ausgehend von den dargestellten Komponenten und deren Schnittstellen einen gehenden und kommenden Verbindungsaufbau. Bei diesem Ausführungsbeispiel wird von einem DECT-Mobilteil als mobiler Kommunikationseinrichtung ausgegangen.

Kurzbeschreibung der Komponenten:
DECT-Mobilteil M:
   - Das Terminal TER beinhaltet die Ein- und Ausgabemedien des Mobilteils K. Es wird via Network (la, 1b) und Besuchereinrichtung VIS 1b, 1c durch die Heimeinrichtung HM gesteuert. Die virtuelle Verbindung zwischen Heimeinrichtung HM und Terminal TER bezeichnet 1d.
   - das Netzwerkmittel NET steuert den Auf- und Abbau der Funkverbindung zur Besuchereinrichtung VIS gemäß DECT 1b.
Vermittlungssystem PINX:
   - Die Besuchereinrichtung VIS betreut die Funkstationen und den Auf- und Abbau der Funkverbindungen zu den Mobilteilen M 1b und behandelt den Basis Call 1c zwischen Besuchereinrichtung VIS und Heimbereich HM.
   - HOME beinhaltet das Callprocessing und die Terminalsteuerung (Device Handling) für leitungsgebundene Endgeräte (Access Level) und behandelt den Basis Call (1c) zwischen Besuchereinrichtung VIS und Heimbereich HM.

Beim Aufbau einer Verbindung durch das Mobilteil ereignet sich folgender Ablauf:
Der Benutzer betätigt die Taste zum Abheben des Hörers. Das Terminal TER signalisiert den Anreiz an das Netzwerkmittel NET (1a). Dieses baut gemäß DECT-Spezifikation eine Funkverbindung zur Besuchereinrichtung VIS auf (1b). Diese übernimmt aus der IPUI-O die Rufnummer desjenigen Heimbereichs der für die Terminalsteuerung zuständig ist. Die Besuchereinrichtung VIS baut mit Hilfe eines Basis Calls eine Verbindung zum Heimbereich HM auf 1c. Der Basis Call beinhaltet einen Signalisierungs- und Nutzdatenkanal. Die Kommunikation zwischen Heimbereich HM und Terminal TER erfolgt im User-Exit des Signalisierungskanals 1c. Der Nutzdatenkanal wird zum Transport der Sprachdaten verwendet. Beide Informationen werden über die Netzwerkmittel NET und die Besuchereinrichtung VIS 16, 1c transparent an das DECT-Mobilteil M weitergeleitet (1d).

Wenn das Mobilteil M gerufen wird ereignet sich folgender Ablauf:
Das Callprocessing signalisiert einen Ruf an den Heimbereich HM. HOME ruft mit Hilfe eines Basis Calls den Besucherbereich VIS 1c. Die Zielrufnummer entnimmt der Heimbereich HM aus einer Location Area Database, die Rufnummernzuordnungen enthält. Im Basic Call wird die Heimbereichsrufnummer des Mobilteils M als Quellenrufnummer signalisiert. Anhand der Quellenrufnummer kann die Besuchereinrichtung VIS das Mobilteil M mittels Paging suchen. Dieses Paging erfolgt gemäß DECT als Broadcast 1b. Die Netzwerkmittel NET quittieren gemäß DECT das Paging 1b, indem sie eine Funkverbindung zur Besuchereinrichtung VIS aufbauen. Die Zuordnung zwischen der Funkverbindung 1b und dem zuvor aufgebauten Basis Call 1c erfolgt anhand der IPUI-O. Diese Zuordnung steuert die Besuchereinrichtung VIS. Im Anschluß baut die Besuchereinrichtung VIS über die Funkverbindung einen Call zu den Netzwerkmitteln NET im Mobilteil M auf. Diese quittieren den Call 1b gemäß DECT und melden dann den Call an das Terminal 1a. Das Terminal aktiviert das Anruforgan und signalisiert im Display den Anruf. Als Folge quittiert die Besuchereinrichtung VIS den Ruf an den Heimbereich HOME 1c. Der Benutzer nimmt den Ruf an. Das Terminal TER signalisiert an die Netzwerkmittel NET 1a, daß die Taste zum Abheben des Hörers betätigt wurde. Danach signalisiert NET die Rufannahme gemäß DECT an die Besuchereinrichtung VIS 1b. Woraufhin diese die Rufannahme an den Heimbereich HM 1c signalisiert.
   Alle weiteren Informationen zwischen Terminal und HOME werden danach im User-Exit des Signalisierungskanals 1d über die Netzwerkmittel NET und die Besuchereinrichtung VIS 1b, 1c signalisiert.

## Patentansprüche

1. Verfahren zur Mobilkommunikation zwischen einer mobilen Kommunikationseinrichtung (M) und einer ihr zugeordneten Heimkommunikationseinrichtung (HM) am Festnetz mit folgenden Merkmalen:
a) die Heimkommunikationseinrichtung (HM) beeinflußt mindestens eine Kommunikationseigenschaft der mobilen Kommunikationseinrichtung (M) und unterhält keine dauerhafte Verbindung zu ihr;
b) zur Einleitung einer Mobilkommunikation werden von der mobilen Kommunikationseinrichtung (M) an eine Besuchereinrichtung (VIS) mindestens eine erste Information übermittelt; **dadurch gekennzeichnet, daß**
c) diese erste Information von der Besuchereinrichtung (VIS) verwendet wird, um eine erste leitungsgebundene Verbindung (V20, V30) zur Heimkommunikationseinrichtung (HM) aufzubauen, und daß
d) die Heimkommunikationseinrichtung (HM) mit der mobilen Kommunikationseinrichtung (M) über die erste leitungsgebundene Verbindung (V20, V30) kommuniziert.

2. Verfahren nach Anspruch 1,
bei dem die erste Information in der mobilen Kommunikationseinrichtung (M) gespeichert wird und ihre Speicherung lediglich einmal administrativ erfolgt.

3. Verfahren nach einem der vorangehenden Ansprüche,
bei dem als Kommunikationsprotokoll zwischen dem Festnetz und der mobilen Kommunikationseinrichtung (M) das DECT-Protokoll eingesetzt wird und die erste Information im Typ O der International Portable User Identification, abgelegt ist.

4. Verfahren nach einem der vorangehenden Ansprüche,
bei dem die Mobilkommunikation über ein privates diensteintegriertes Netz (PISN) erfolgt, wobei eine Heimkommunikationseinrichtung in Form einer ersten Vermittlungseinrichtung (PINX) eingesetzt wird, und die Besuchereinrichtung (VIS) einen Basic-Call (BC) veranlaßt.

5. Verfahren nach Anspruch 4,
bei dem die erste Information sich auf die Rufnummer der ersten Vermittlungseinrichtung bezieht.

6. Verfahren nach einem der vorangehenden Ansprüche,
bei dem lediglich eine Signalisierungsverbindung aufgebaut wird.

7. Mobilkommunikationsanordnung mit
a) einer ersten Vermittlungseinrichtung (PINX) mit einer ersten Heimkommunikationseinrichtung (HM) mit mindestens einem Mittel zur Beeinflussung einer mobilen Kommunikationseinrichtung (M),
b) mindestens einer ersten mobilen Kommunikationseinrichtung (M) mit Terminalmitteln (TER), die durch die erste Heimkommunikationseinrichtung (HM) beeinflußbar sind, wobei die erste mobile Kommunikationseinrichtung (M) einen Speicher zur Speicherung einer ersten Information aufweist,
c) mindestens einer ersten Besuchereinrichtung (VIS) zur Kontaktierung mobiler Kommunikationseinrichtungen (M), und
d) Mittel zur Übergabe (NET) der ersten Information an die erste Besuchereinrichtung (VIS),
**dadurch gekennzeichnet, daß**
e) zumindest ein Mittel zur Verwendung der ersten Information durch die Besuchereinrichtung (VIS), um eine erste leitungsgebundene Verbindung (V20, V30) zur Heimkommunikationseinrichtung (HM) aufzubauen, vorgesehen ist.

8. Mobilkommunikationsanordnung nach Anspruch 7,
die zwischen der ersten Vermittlungseinrichtung (PINX) und der ersten Mobilkommunikationseinrichtung (M) ein privates diensteintegriertes Netz (PISN) aufweist.

9. Mobilkommunikationsanordnung nach einem der Ansprüche 7 oder 8,
bei der die erste Besuchereinrichtung (VIS) in der ersten Vermittlungseinrichtung (PINX) angeordnet ist.

10. Mobilkommunikationsanordnung nach einem der Ansprüche 7 bis 9,
bei dem die erste mobile Kommunikationseinrichtung (M) erste Netzwerkmittel (NET) aufweist, die mit den Terminalmitteln (TER) in Wirkverbindung (V10) stehen, wobei die ersten Netzwerkmittel (NET) die erste Besuchereinrichtung (VIS) funktional steuern und/oder umgekehrt.

## Claims

1. Method for mobile communication between a mobile communication arrangement (M) and an associated home communication arrangement (HM) connected at a fixed network, with the following features:
a)the home communication arrangement (HM) influences at least one communications characteristic of the mobile communication arrangement (M) and maintains no lasting connection to it;
b)at least one first information is transmitted from the mobile communication arrangement (M) to a visitor arrangement (VIS) for introducing a mobile communication; **characterised in that**
c) this first information is used by the visitor arrangement (VIS) to construct a first conductor-based connection (V20, V30) to the home communication arrangement (HM), and that
d) the home communication arrangement (HM) communicates with the mobile communication arrangement (M) over the first conductor-based connection (V20, V30).

2. Method according to claim 1,
in which the first information is stored in the mobile communication arrangement (M) and is only stored once administratively.

3. Method according to any one of the preceding claims,
in which the DECT protocol is used as the communication protocol between the fixed network and the mobile communication arrangement (M) and the first information is filed in the type O of the International Portable User Identification.

4. Method according to any one of the preceding claims,
in which the mobile communication takes place over a private integrated service network (PISN), wherein a home communication arrangement in the form of a first exchange unit (PINX) is used and the visitor arrangement (VIS) initiates a basic call (BC).

5. Method according to claim 4,
in which the first information relates to the telephone number of the first exchange unit.

6. Method according to one of the preceding claims,
in which only a signalling connection is constructed.

7. Mobile communication arrangement with
a) a first exchange unit (PINX) with a first home communication arrangement (HM) with at least one means for influencing a mobile communication arrangement (M),
b) at least one first mobile communication arrangement (M) with terminal means (TER) which can be influenced by the first home communication arrangement (HM), wherein the first mobile communication arrangement (M) has a memory for storing a first information,
c) at least one first visitor arrangement (VIS) for contacting mobile communication arrangements (M), and
d) means for transferring (NET) the first information to the first visitor arrangement (VIS), **characterised in that**
e) at least one means for use of the first information by the visitor arrangement (VIS) is provided in order to construct a first conductor-based connection (V20, V30) for the home communication arrangement (HM).

8. Mobile communication arrangement according to claim 7,
which has a private integrated service network (PISN) between the first exchange unit (PINX) and the first mobile communication arrangement (M).

9. Mobile communication arrangement according to any one of the claims 7 or 8,
in which the first visitor arrangement (VIS) is arranged in the first exchange unit (PINX).

10. Mobile communication arrangement according to any one of the claims 7 to 9,
in which the first mobile communication arrangement (M) has first network means (NET) which are operatively connected (V10) with the terminal means (TER), wherein the first network means (NET) functionally control the first visitor arrangement (VIS) and/or vice versa.

## Revendications

1. Procédé pour communication mobile entre un dispositif de communication mobile (M) et un dispositif de communication domestique (HM) qui lui .est associé sur le réseau fixe, présentant les caractéristiques suivantes :
a) le dispositif de communication domestique (HM) influence au moins une propriété de communication du dispositif de communication mobile (M) et n'entretient aucune liaison durable avec lui;
b) pour le déclenchement d'une communication mobile, au moins une première information est transmise par le dispositif de communication mobile (M) à un dispositif visiteur (VIS) ; **caractérisé en ce que**
c) cette première information est utilisée par le dispositif visiteur (VIS) afin d'établir une première liaison guidée (V20, V30) avec le dispositif de communication domestique (HM), et **en ce que**
d) le dispositif de communication domestique (HM) communique avec le dispositif de communication mobile (M) par la première liaison guidée (V20, V30).

2. Procédé selon la revendication 1, pour lequel la première information est enregistrée dans le dispositif de communication mobile (M) et son enregistrement administratif est juste effectué une fois.

3. Procédé selon l'une quelconque des revendications précédentes, pour lequel le protocole DECT est utilisé comme protocole de communication entre le réseau fixe et le dispositif de communication mobile (M) et la première information est enregistrée dans le type O de l'identification d'utilisateur de portable internationale.

4. Procédé selon l'une quelconque des revendications précédentes, pour lequel la communication mobile est effectuée par un réseau privé à intégration de service (PISN), un dispositif de communication domestique étant utilisé sous la forme d'un premier dispositif de transmission (PINX) et le dispositif visiteur (VIS) ordonne un appel de base (BC).

5. Procédé selon la revendication 4, pour lequel la première information se rapporte au numéro d'appel du premier dispositif de transmission.

6. Procédé selon l'une quelconque des revendications précédentes, pour lequel juste une liaison de signalisation est établie.

7. Ensemble de communication mobile avec :
a) un premier dispositif de transmission (PINX) présentant un premier dispositif de communication domestique (HM) avec au moins un moyen pour influencer un dispositif de communication mobile (M),
b) au moins un premier dispositif de communication mobile (M) avec des moyens terminaux (TER) qui peuvent être influencés par le premier dispositif de communication domestique (HM), le premier dispositif de communication mobile (M) présentant une mémoire pour l'enregistrement d'une première information,
c) au moins un premier dispositif visiteur (VIS) pour établir le contact avec des dispositifs de communication mobiles (M), et
d) des moyens de remise (NET) de la première information au premier dispositif visiteur (VIS),
**caractérisé en ce que**
e) au moins un moyen pour l'utilisation de la première information par le dispositif visiteur (VIS) afin d'établir une première liaison guidée (V20, V30) avec le dispositif de communication domestique (HM), est prévu.

8. Ensemble de communication mobile selon la revendication 7, qui présente un réseau privé à intégration de service (PISN) entre le premier dispositif de transmission (PINX) et le premier dispositif de communication mobile (M).

9. Ensemble de communication mobile selon l'une quelconque des revendications 7 ou 8, pour lequel le premier dispositif visiteur (VIS) est disposé dans le premier dispositif de transmission (PINX).

10. Ensemble de communication mobile selon l'une quelconque des revendications 7 à 9, pour lequel le premier dispositif de communication mobile (M) présente des premiers moyens de réseau (NET) qui sont en liaison active avec les moyens terminaux (TER), les premiers moyens de réseau (NET) commandant de manière fonctionnelle le premier dispositif visiteur (VIS) et/ou inversement.
